# EUROPEAN PATENT SPECIFICATION

(11) **EP 1 751 070 B1**
(45) Date of publication and mention of the grant of the patent: **01.08.2007**
(21) Application number: 05714863.7
(22) Date of filing: 30.03.2005
(51) Int. Cl.: C03B 7/086

(54) **DRIVING MECHANISM OF A PLUNGER OF A MOLTEN GLASS FEEDER MACHINE**
TREIBMECHANISMUS EINES PLUNGERS EINER GLASSCHMELZESPEISERMASCHINE
MECANISME D'ENTRAINEMENT D'UN PLONGEUR D'UNE MACHINE D'ALIMENTATION EN VERRE FONDU

(30) Priority: 25.05.2004 CZ 20040640
(43) Date of publication of application: 14.02.2007
(73) Proprietor: Sklostroj Turnov CZ, S.R.O., 511 24 Turnov (CZ)
(72) Inventor: FILIP, Petr, 463 45 Pencin (CZ)
(74) Representative: Andera, Jiri
(86) International application number: PCT/CZ2005/000031
(87) International publication number: WO 2005/115932

(56) References cited:
- WO-A1-96/00192
- US-A- 3 201 218

## Description

### Technical Field

The invention concerns a driving mechanism of a plunger of a molten glass feeder machine comprising an arm on which at least one plunger is installed. The arm is attached to a supporting column that is attached to a frame in a sliding way. The supporting column is connected with the use of a connecting rod to a lever attached to the frame with a first pin. The lever is connected with the use of a rod to a crank attached to the frame with a second pin. A cam connected to a motor is in contact with the crank.

### Background Art

To form drops of molten glass in feeder machines a ceramic plunger with vertical return movement is used to push molten glass through a drip ring. During the upward movement of the plunger, molten glass is suctioned from the dosing hole and during the downward movement, molten glass is pushed into the dosing hole. The vertical movement of the plunger is ensured with the use of a multi-element cam mechanism, with a ball screw or a linear electric motor.

Document US 2749665 describes a driving mechanism of the plunger for a molten glass feeder machine where the plunger is installed on an arm that is moved vertically in a returning manner with a multi-element mechanism represented by a cam. A disadvantage of this solution is the necessity to replace the cam in case of a change of the required course of motion of the plunger and the necessity to adjust the operation parameters of the mechanism manually (stroke of the plunger and the height of the bottom position of the plunger).

A modernized design of such a mechanism is presented in the published application no. WO 96/00192, where a steel cam is replaced with a fixed crank mechanism. A disadvantage of this solution is the continuing necessity to adjust the plunger stroke and the height of the bottom position of the plunger manually.

The driving mechanism of the plunger of molten glass feeder machines used at present has an arm on which at least one plunger is installed. The arm is attached to a supporting column that is fixed to the frame in a sliding way. With the use of a connecting rod the supporting column is connected to a lever fixed to the frame with a pin. With the use of a rod the lever is connected to a crank fixed to the frame with another pin. A cam connected to the motor is in contact with the crank. The cam is designed in such a way as to rotate by exactly one turn in one working cycle. The stroke is adjusted by moving the rod joint along the lever. If an electric driving motor with constant speed is used, with every change of the required course of movement of the plunger it is still necessary to replace the cam.

A common disadvantage of all the known embodiments of driving mechanisms of the plunger for molten glass feeder machines is the necessity to replace the cam at every change of the required course of movement of the plunger and manual setting of the plunger movement parameters, i.e. the stroke and the height of the bottom position of the plunger. For this reason the possibility of a repeated setting of the same parameters in the case of repeated production is hard to achieve.

This is why the aim of this solution is to design a mechanism that would make it possible to change the required course of movement of the plunger without the necessity to replace the cam and that would also enable electronic adjustment of parameters of plunger movement (stroke and height of the bottom position of the plunger).

### Disclosure of Invention

The above-mentioned aim is achieved by using a driving mechanism of a plunger of a molten glass feeder machine comprising an arm on which at least one plunger is installed. The arm is attached to a supporting column that is attached to a frame in a sliding way. The supporting column is connected with the use of a connecting rod to a lever attached to the frame with a first pin. The lever is connected with the use of a rod to a crank attached to the frame with a second pin. A cam connected to a motor is in contact with the crank. The motor of the cam is a reversible motor which is connected to a control unit for controlling speed and/or path.

The advantage of this driving mechanism of the plunger for a molten glass feeder machine is that it allows to change the course of movement of the plunger by changing the swinging range of the cam only, so it is no longer necessary to replace the cam due to changed production parameters. Within one working cycle the cam swings from one set limit position to the other set limit position and back. It does not have to rotate by exactly one turn during one working cycle as before when the cam always rotated in the same direction. Easy adjustment of the mechanism is achieved through interconnection of the reversible motor of the cam with a control unit for controlling speed and/or path.

The working surface of the cam can have the shape of a discontinuous curve or the shape of an Archimedean spiral.

To limit friction, it is advantageous if the cam touches the crank over a roller fixed with the third pin that is attached to the crank.

To eliminate forces of inertia it is advantageous if the crank is pressed to the cam with a pneumatic cylinder.

The pneumatic cylinder can be conveniently installed between the frame and the arm.

### Brief Description of Drawings

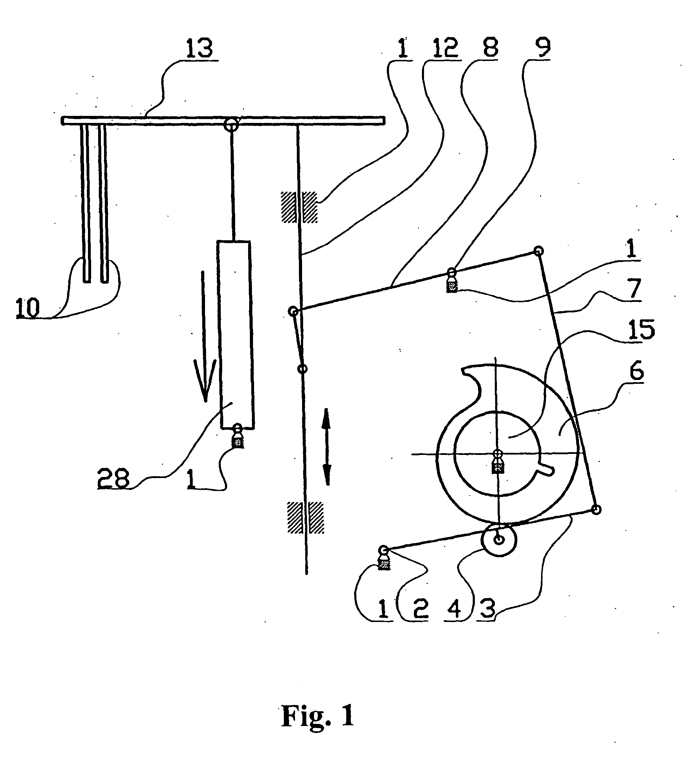

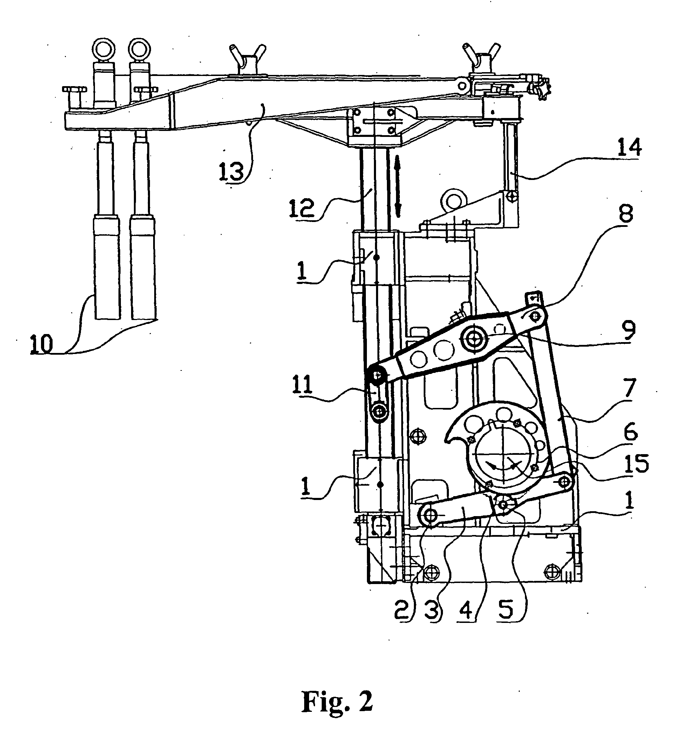

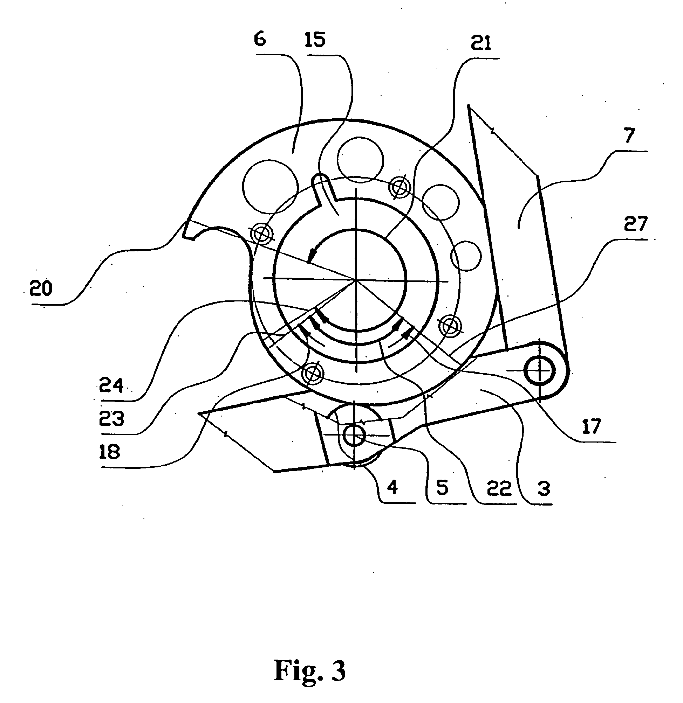

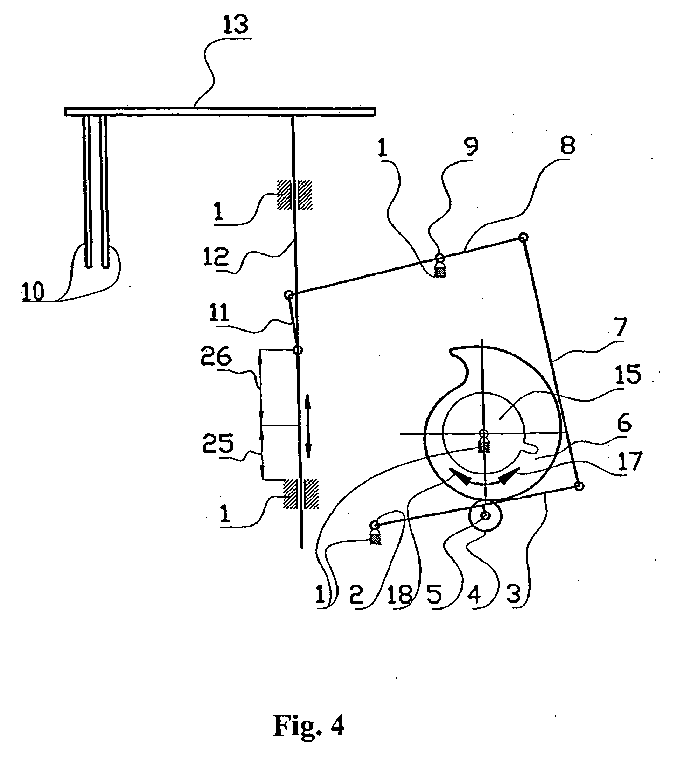

The invention will be described in detail with the use of drawings where fig. 1 presents a kinematic diagram of an embodiment of the driving mechanism of the plunger for a molten glass feeder machine based on the invention. Fig. 2 presents the same embodiment in a more detailed way. Fig. 3 presents a detail of the cam from fig. 2. Fig. 4 shows the driving mechanism of the plunger for a molten glass feeder machine equipped with a pressing pneumatic cylinder.

### Modes for Carrying Out the Invention

The driving mechanism of the plunger 10 of a molten glass feeder machine according to fig. 1 and 2 comprises an arm 13 on which two ceramic plungers 10 are installed each of which sucks molten glass from a dosing opening (not shown) during its upward movement and pushes molten glass into a dosing opening for pushing molten glass through a drip hole (not shown) during the downward movement. It is evident to experts that a variable number of plungers 10 can be installed on the common arm 13.

The arm 13 of the plungers 10 is attached to a supporting column 12 that is mounted in the frame 1 in a sliding way. An articulated connecting rod 11 interconnects the supporting column 12 with a lever 8 installed in the swinging way on the frame 1 with the use of a first pin 9. The arm 13 is protected from rotation with a guide 14.

With the use of a rod 7 installed on a joint the lever 8 is interconnected with the crank 3 mounted in a swinging way on the frame 1 with a second pin 2. Unlike the state ofart the joint connection of the rod 7 does not need to slide along the lever 8.

The cam 6 is in contact with the crank 3 over a roller 4 connected to the crank 3 with a third pin 5.

The cam 6 is mounted on the output shaft 15 of a face-bevel gearbox of the "Vogel MKSH8" type driven by a reversible motor. In the described embodiment a "Lenze MCS14H32" synchronous servomotor is used, but experts know that any reversible motor can be used and not only an electric motor, but also a hydraulic or pneumatic motor.

The cam 6 can have the shape of a discontinuous curve. In the presented embodiment the active surface of the cam 6 has the shape of an Archimedean spiral.

The reversible synchronous rotational servomotor of the cam 6 is interconnected with an electronic control unit (not shown here) for controlling the speed and/or path of the motor and the speed and/or path of the cam consequently.

Electronic control units for controlling the speed and/or path of servomotors are well-known and this is why they will not be described in detail here.

The electronic control unit can be used to change the working angle 22 of the cam 6 and the location of limit positions within the scope delimited on the active surface of the cam 6 by the first limit position 24 and the second limit position 20 (see fig. 3). This way the stroke 26 of the plunger 10 and the range 25 of setting of the bottom position of the plunger 10 (see fig 1) can be changed. The setting range 25 of the bottom position of the plunger 10 results from the size of the maximum turning angle 21 of the cam 6. The stroke 26 of the plunger 10 results from the size of the currently set working angle 22 of the cam 6.

Before the mechanism is put in operation the control unit is used to program the location of the left limit position 23 (see fig. 3) and the right limit position 27 and this way the working angle 22 of the cam 6 is selected at the same time. At the same time a course of rotation speed of the cam 6 within the selected working angle 22 can be programmed.

In one working cycle the cam 6 turns from the left limit position 23 to the right limit position 27 and back.

Fig. 1 shows that in the presented embodiment during the rotation of the cam 6 in the direction of the arrow 18 the roller 4 is pushed downwards together with the crank 3 and the crank 3 moves the supporting column 12 using the rod 7, lever 8 and connecting rod 11 and in this way also moves the arm 13 with the plungers 10 upwards. Similarly, during turning of the cam 6 in the direction of the arrow 17 the supporting column 12 and the arm 13 with the plungers 10 move downwards.

In the first embodiment according to figs. 1 and 2 the crank 3 with the roller 4 is only pushed to the cam 6 by the weight of the supporting column 12, arm 13 and plungers 10. In the case of higher swinging speeds of the cam 6 such pushing force may be insufficient and the cam 6 may lose contact with the roller 4.

Additional increase of the pushing force is solved by using of the mechanism presented in fig. 4, which is, as compared to the embodiment of figs. 1 and 2, provided with a pneumatic cylinder 28 mounted between the frame 1 and the arm 13 of the plungers 10.

The pneumatic cylinder 28 according to fig. 4 pulls the arm 13 and the supporting column 12 downwards, which causes pushing of the crank 3 with the roller 4 to the cam 6.

## Claims

1. A driving mechanism of a plunger (10) of a molten glass feeder machine comprising an arm (13) on which at least one plunger (10) is installed while the arm (13) is attached to a supporting column (12) that is attached to a frame (1) in a sliding way and with the use of a connecting rod (11) the supporting column (12) is connected to a lever (8) attached to the frame (1) with a first pin (9) and with the use of a rod (7) the lever (8) is connected to a crank (3) attached to the frame (1) with a second pin (2) while a cam (6) connected to a motor is in contact with the crank (3), **characterized in that** the motor of the cam (6) is a reversible motor which is connected to a control unit for controlling speed and/or path.

2. The mechanism according to claim 1, **characterized in that** the cam (6) has the shape of a discontinuous curve.

3. The mechanism according to claim 1, **characterized in that** the cam (6) has the shape of an Archimedean spiral.

4. The mechanism according to any of claims 1 to 3, **characterized in that** the cam (6) gets in contact with the crank (3) over a roller (4) installed with the use of the third pin (5) mounted on the crank (3).

5. The mechanism according to any of claims 1 to 4, **characterized in that** the crank (3) is pushed towards the cam (6) with a pneumatic cylinder (28).

6. The mechanism according to claim 5, **characterized in that** the pneumatic cylinder (28) is installed between the frame (1) and the arm (13).

## Patentansprüche

1. Antriebsmechanismus für einen Plunger (10) einer Glasmassedosierung, der einen Arm (13) enthält, auf dem mindestens ein Plunger (10) installiert ist, wobei der Arm (13) auf einer tragenden Säule (12) befestigt ist, die beweglich im Rahmen (1) gelagert ist und mit Hilfe eines Verbindungszugs (11) ist die tragende Säule (12) mit einem Kipphebel (8) verbunden, der mit Hilfe eines ersten Bolzens (9) zum Rahmen (1) angeschlossen ist und mit Hilfe eines Zuges (7) ist der Kipphebel (8) mit einer Kurbel (3) verbunden, die zum Rahmen (1) mit einem zweiten Bolzen (2) angeschlossen ist, wobei ein mit dem Motor verbundene Nocken (6) mit der Kurbel (3) im Kontakt steht, **dadurch gekennzeichnet, dass** der Motor des Nockens (6) ein reversibler Motor ist, der mit der Steuereinheit zur Steuerung der Geschwindigkeit und/oder des Weges verbunden ist.

2. Mechanismus gemäß Anspruch 1, **dadurch gekennzeichnet, dass** der Nocken (6) die Form einer unstetigen Kurve hat.

3. Mechanismus gemäß Anspruch 1, **dadurch gekennzeichnet, dass** der Nocken (6) die Form einer Archimedes-Spirale hat.

4. Mechanismus gemäß einem der Ansprüche 1 bis 3, **dadurch gekennzeichnet, dass** der Nocken (6) auf die Kurbel (3) mit Hilfe einer Rolle (4) aufsetzt, gelagert auf dem dritten Bolzen (5), der auf der Kurbel (3) gelagert ist.

5. Mechanismus nach einem der Ansprüche 1 bis 4, **dadurch gekennzeichnet, dass** die Kurbel (3) auf den Nocken (6) mit einem pneumatischen Zylinder (28) angedrückt wird.

6. Mechanismus gemäß Anspruch 5, **dadurch gekennzeichnet, dass** der pneumatische Zylinder (28) zwischen dem Rahmen (1) und dem Arm (13) angeordnet ist.

## Revendications

1. Le mécanisme de propulsion du plongeur (10) du doseur de verre fondu, comprenant un bras (13) sur lequel repose au moins un plongeur (10), le bras (13) étant fixé à un poteau porteur (12), logé en coulissant dans un cadre (1), le poteau (12) étant relié par une tige de raccordement (11) avec un balancier (8) fixé au cadre (1) par le premier axe (9), et le balancier (8) étant relié par une tige (7) avec une manivelle (3) fixée au cadre (1) par le deuxième axe (2), la came (6) fixée au moteur touchant la manivelle (3), **caractérisé en ce que** le moteur de la came (6) est un moteur réversible, relié à l'unité de commande de vitesse et/ou de trajectoire.

2. Le mécanisme selon la revendication 1, **caractérisé en ce que** la came (6) a la forme d'une courbe discontinue.

3. Le mécanisme selon la revendication 1, **caractérisé en ce que** la came (6) a la forme d'une spirale d'Archimède.

4. Le mécanisme selon l'une des revendications 1 à 3, **caractérisé en ce que** la came (6) repose sur la manivelle (3) par l'intermédiaire d'un galet (4) placé sur le troisième axe (5) logé sur la manivelle (3).

5. Le mécanisme selon l'une des revendications 1 à 4, **caractérisé en ce que** la manivelle (3) est poussée contre la came (6) par un cylindre pneumatique (28).

6. Le mécanisme selon la revendication 5, **caractérisé en ce que** le cylindre pneumatique (28) est disposé entre le cadre (1) et le bras (13).
